# EUROPEAN PATENT APPLICATION

(11) **EP 3 708 002 A1**
(43) Date of publication of application: **16.09.2020**
(21) Application number: 19461519.1
(22) Date of filing: 15.03.2019
(51) Int. Cl.: A01M 31/00

(54) **A MOBILE HIDE**

(71) Applicant: Zwoltex Sp. z o.o., 98-220 Zdunska Wola (PL)
(72) Inventor: Wajchert, Pawel, 98-220 Zdunska Wola (PL)
(74) Representative: Kancelaria Eupatent.pl Sp. z.o.o

(57) **Abstract**

A mobile hide, mounted on a trailer, comprising: a housing, a driving means configured to alter a position of the housing between a lowered configuration and a raised configuration, a guide assembly configured to ensure a substantially vertical movement of the housing, **characterized in that** the hide (1, 1', 1", 1''') further comprises: at least two guide assemblies (6), each guide assembly (6) comprising at least two linear guides (9, 10); and a rope driving system comprising: a drive member (21, 21') mounted on the trailer (2); and pulleys (16, 17, 18, 19, 22) attached to the trailer (2) and to the linear guides (9, 10); wherein two of the pulleys (16, 17; 18, 19) are attached to a single linear guide (9, 10).

## Description

### TECHNICAL FIELD

The present invention relates to a mobile hide.

### BACKGROUND

In the art there are many types of platforms or hides which are raised when in use, assembled on the ground or mobile. They may be stationary designed as stands provided with legs or assembled on trees. The mobile ones are usually assembled on trailers in order to displace them to various destinations. They are typically used by hunters, ornithologists, photographers and other people who need to climb up or be raised up to a certain height in order to realize their hobbies or activities.

Patent US5862827 discloses a mobile and adjustable elevated platform, such as for observation, or being a hunting blind. The platform is supported on a mobile stand by plural telescopic legs, and a centrally positioned telescopic lifting mechanism. The lifting mechanism and the supporting elements are attached to the roof of the blind. The weight of the entire hide housing and the persons in it is loaded to the roof which must be taken into account when designing the housing of the hide. The enclosure may be accessed through a door and by means of an extension ladder.

In some of the hides known in the art, extremely rigid supports must be employed. Such supports are usually heavy therefore the trailers must have suitable carrying capacity. In case a hide is supposed to be raised to a significant height, long guiding elements and long actuators must be used, they may protrude out of the overall dimensions of the hide housing when in transport. Such long guides are unstable and additional elements must be used in order to obtain suitable rigidity of the entire structure before an observer or a hunter climbs up the hide.

### SUMMARY

There is disclosed herein a mobile hide, mounted on a trailer, comprising: a housing, driving means configured to alter a position of the housing between a lowered configuration and a raised configuration, a guide assembly configured to ensure a substantially vertical movement of the housing. The hide is characterized in that the hide further comprises: at least two guide assemblies, each guide assembly comprising at least two linear guides; and a rope driving system comprising: a drive member mounted on the trailer; and pulleys attached to the trailer and to the linear guides; wherein two of the pulleys are attached to a single linear guide.

The hide may comprise four or six guide assemblies.

The hide may be further provided with a support assembly which comprises a support leg and a stiffening bar.

The support assembly may be attached to a linear guide of the guide assembly.

The support assembly may be attached to a mounting member attached to the chassis of the trailer.

The mounting member may be substantially parallel to the linear guide of the guide assembly.

The drive member may comprise two shafts coupled by gear wheels.

The drive member may further comprise a threaded shaft and a nut-like element coupled with the shafts to engage limit switches or sensors.

The mobile hide according to the invention is very light and compact. The total height in transporting configuration amounts to the height of the hide housing plus the height of the trailer chassis, no parts extend above the roof of the hide or behind it. The length of the carrying part of the trailer chassis does not exceed the length of the hide. The hide is supposed to be operated by one person and the overall time needed to raise the hide amounts to a few minutes. The height to which it is raised is variable and may be adjusted by the person being located in the hide. The lifting structure of the hide is suitable also for longer hides i.e. it may be extended.

### BRIEF DESCRIPTION OF FIGURES

The object of the invention is described hereunder with reference to embodiments presented in the drawing in which:
Fig. 1 presents a side view of a hide in a first embodiment in a transport configuration,
Fig. 2 presents a perspective view of the hide in the first embodiment in the transport configuration,
Fig. 3 presents a perspective view of the hide in the first embodiment in a raised configuration,
Fig. 4 presents a cross-section of a guide assembly,
Fig. 5 presents a front side view of the guide assembly in the transport configuration,
Fig. 6 presents a front side view of the guide assembly in the raised configuration,
Fig. 7 presents a perspective view of the hide in a second embodiment in the raised configuration,
Fig. 8 presents a perspective view of the hide in a third embodiment in the transport configuration,
Fig. 9 presents a perspective view of the hide in a fourth embodiment in the transport configuration,
Fig. 10 presents a perspective view of the hide in the fourth embodiment in the raised configuration,
Fig. 11 presents a view of a support assembly in a transport configuration,
Fig. 12 presents a view of the support assembly in a support configuration,
Fig. 13 presents a schematic view of a driving member, and
Fig. 14 presents a diagram of driving and controlling elements.

### DETAILED DESCRIPTION

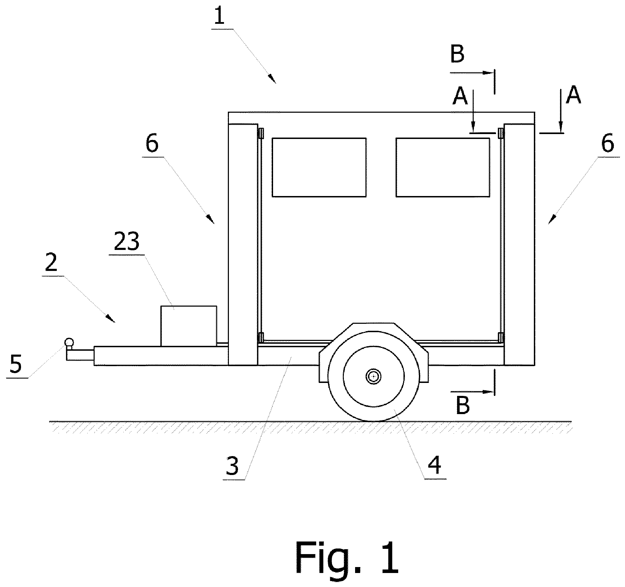

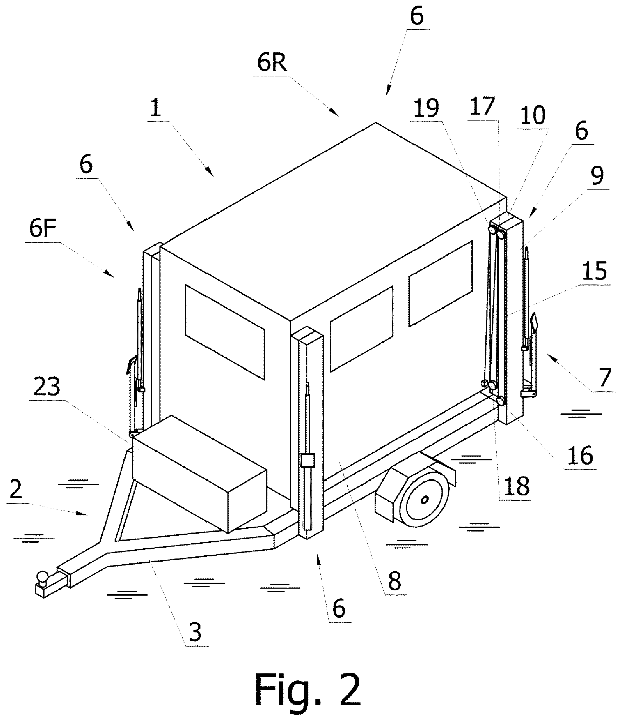

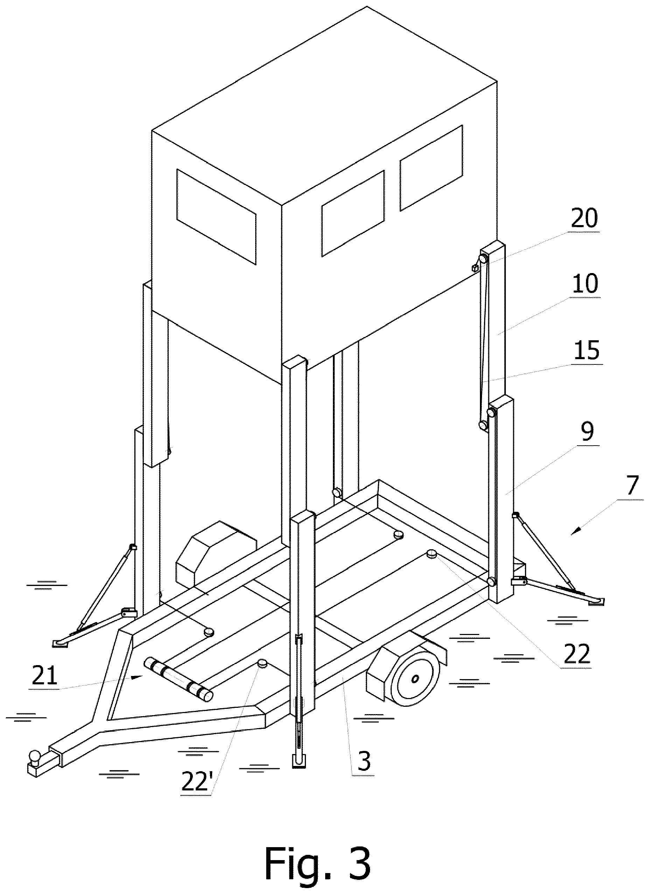

Referring to Fig. 1, 2 and 3, the first embodiment of a mobile hide is presented. The hide 1 is mounted on a trailer 2 which is shown schematically. A chassis 3 of the trailer 2 is provided with wheels 4 and a hook 5. The hide may have windows and a door, the door may be located on the rear side, i.e. on the wall opposite to the trailer hook 5 or on any other. In Fig. 1 and 2 the mobile hide 1 is presented in a transport configuration (or a lowered configuration) i.e. in its lowermost position, in which the bottom of the hide housing 8 may be supported on the chassis 3. The housing 8 of the hide 1 is mounted on guide assemblies 6 which are attached to the trailer 2. Further it is provided with support assemblies 7 (shown in Fig. 2, 3) arranged to support and stabilize the hide 1 before raising it. Fig. 3 presents the hide 1 in a raised configuration.

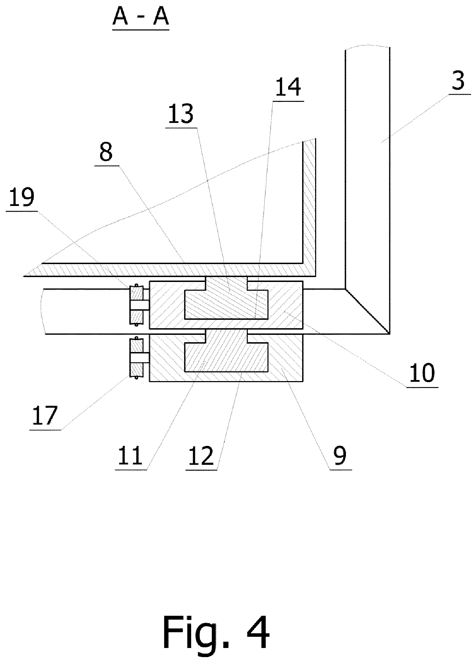

In the presented embodiment there are four guide assemblies 6 positioned at the corners of the hide housing 8. The guide assembly 6 comprises at least two linear guides. The guide assembly 6 comprises a first linear guide 9 attached to the chassis 3. A second linear guide 10 is slidably mounted on the first guide 9. The hide housing 8 is slidably mounted on the second guide 10. Fig. 4 presents a cross-section A-A through the linear guides 9, 10 and the housing 8 indicated in Fig. 1. The linear slide guides 9, 10 and the housing 8 are shown schematically. A slide 11 attached to the linear guide 10 is positioned in a guiding groove 12 of the first linear guide 9, the slide 11 may move along the linear guide 9. A slide 13 attached to the housing 8 is positioned in a guiding groove 14 of the second linear guide 10, the slide 13 may move along the linear guide 10. The linear guides may also be provided with rolling elements. The guide 10 and the housing 8 are displaced by means of a rope driving system, typically a steel rope can be employed. A rope 15 passes around pulleys 16 and 17 attached to the guide 9 and pulleys 18 and 19 attached to the guide 10. The rope 15 is attached to a clamp 20 on the housing 8, runs up to the pulley 19, down to the pulley 18, up to the pulley 17, down to the pulley 16 and next to a driving member 21 via a pulley 22 attached to the chassis. The presented driving member 21 is a shaft, it may be a threaded shaft with a thread pitch equal to the diameter of the rope 15.

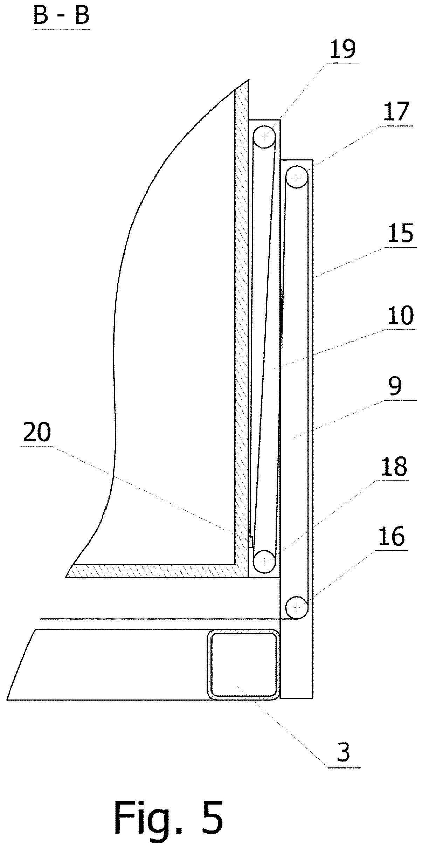

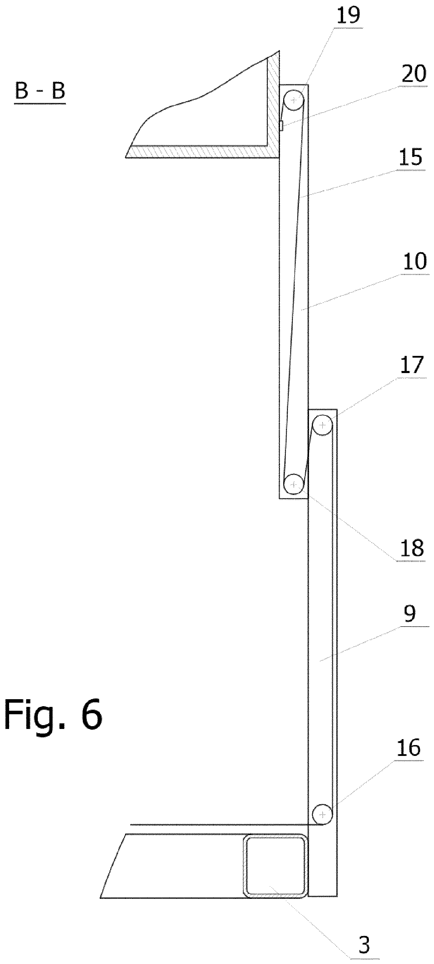

As the driving member 21 revolves, the ropes 15 are pulled, the linear guides 9 and 10 in each guide assembly 6 move in relation to each other and the linear guide 10 moves in relation to the housing 8, thus the hide 1 is raised to a required height. Fig. 5 and 6 present a cross-section B-B through the housing 8 indicated in Fig. 1. Fig. 5 shows the lowermost position of the hide 1, Fig. 6 shows the uppermost position. In the presented embodiment two linear guides are employed in the guide assembly 6, it is clear that more than two linear guides may be employed to ensure raising the hide housing 8 to a higher level (there may be another guide between the second guide 10 and the housing 8). As presented in Fig. 2 there are four guide assemblies 6, in other words there is a front pair 6F of the guide assemblies 6 located on the front side of the trailer and a rear pair 6R of the guide assemblies 6 located at the back side of the trailer (Fig. 2).

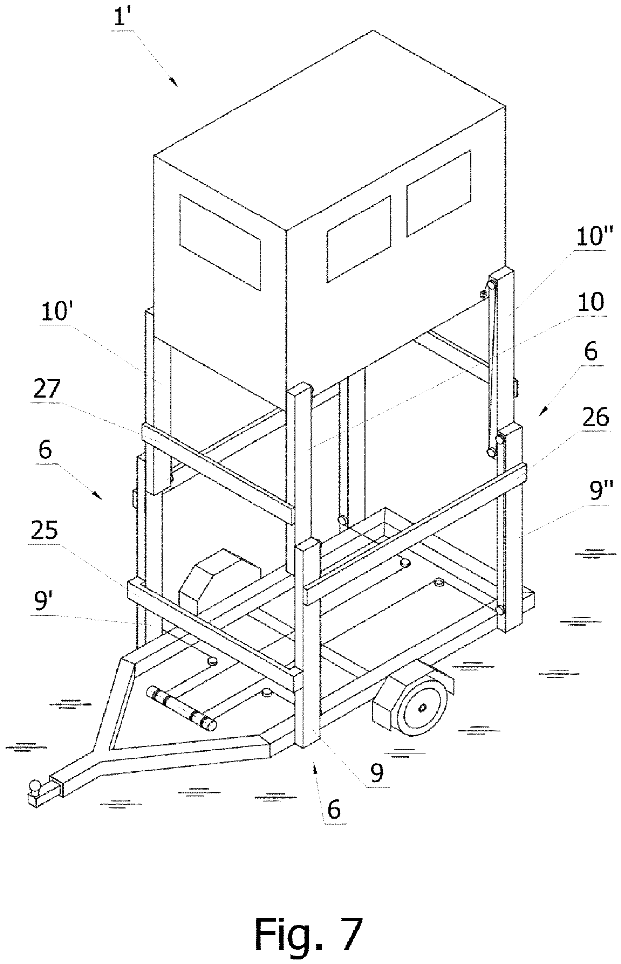

Referring to Fig. 7, a hide 1' in a second embodiment is presented which is provided with cross bars between the guide assemblies 6, which increase the rigidity of the entire structure. A cross bar 25 is stretched between the linear guides 9 and 9' of the front pair of the guide assemblies 6, a cross bar 26 is stretched between the linear guide 9 of the front pair and the linear guide 9" of the rear pair. Similar bars may be located on the opposite sides. Due to the cross bars employed between the guides 9, the entire three-dimensional structure becomes more rigid and light guides of low rigidity may be employed. A cross bar 27 is stretched between the guides 10 and 10' of the front pair of the guide assemblies 6. A similar bar may be located at the back of the hide. Between the guides 10 and 10" there may be attached another cross bar. Due to the cross bars between the guides 10, the entire structure becomes more rigid and the guides 10 of all the guide assemblies 6 may be raised evenly i.e. at the same speed. The cross bars may have any shapes, two or more bars, crossed or parallel to each other, may be used to connect two guides.

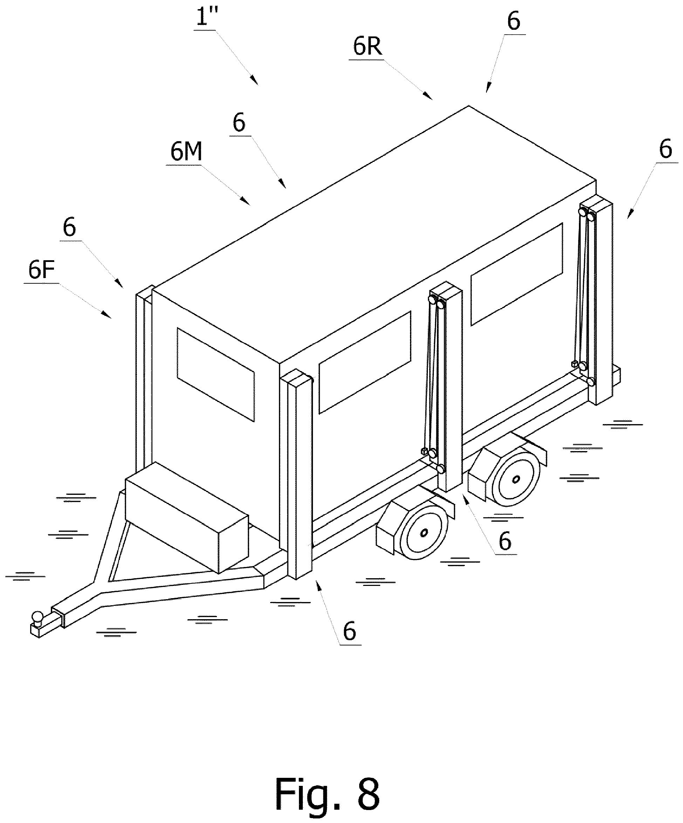

Referring to Fig. 8, a longer hide 1" in a third embodiment is presented, namely extended in the transportation direction. Such a hide may require more pairs of guide assemblies, in the presented embodiment three pairs of the guide assemblies i.e. six guide assemblies are employed. As it can be noticed there is a front pair 6F of the guide assemblies 6, a middle pair 6M and a rear pair 6R. The amount of the guide assemblies, i.e. the amount of pairs of the guide assemblies may be increased for a longer housing 8. Due to a bigger amount of the guide assemblies and even locations of the guides along the housing, the structure of the housing does not have to be very rigid.

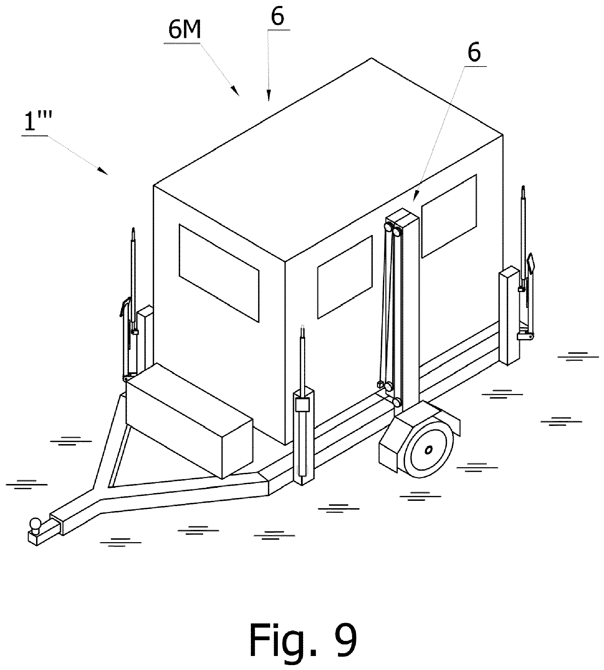

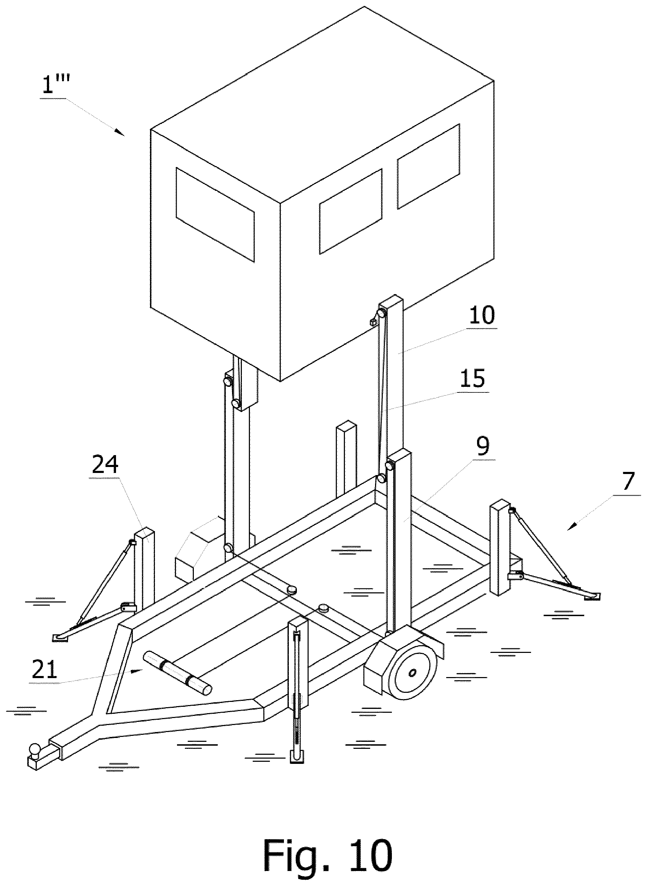

Referring to Fig. 9 and 10, a hide 1"' in a fourth embodiment with just one pair 6M of the guide assemblies is presented. Employing just one pair of the guide assemblies 6 is suitable for a small hide housing. The support assemblies 7 are attached to the chassis 3 provided with substantially vertical bar-like mounting members 24, the members 24 may have any other shape.

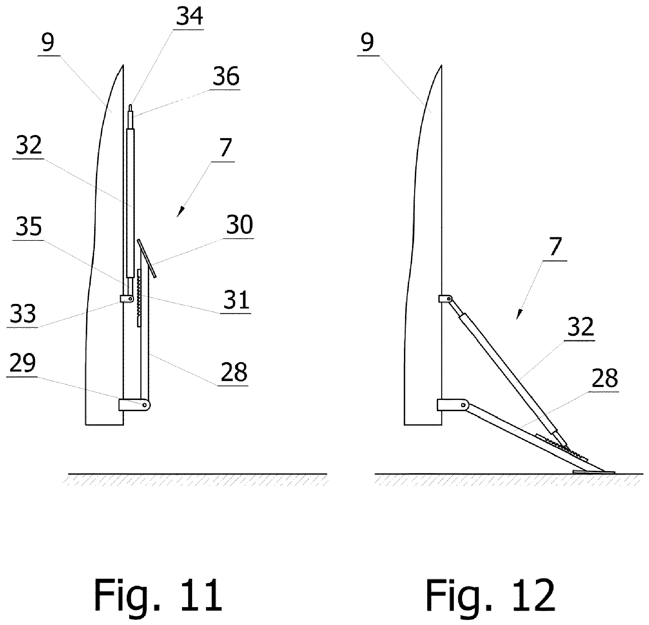

The first and the fourth embodiments are presented with support assemblies 7 which may as well be employed in the other embodiments. In the hide 1 there are four support assemblies 7 located at the corners of the hide 1. Referring to Fig. 11 the support assembly 7 is presented in transport configuration, while in Fig. 12 in a support configuration. The support assembly 7 comprises a support leg 28 and a stiffening bar 32. The support leg 28 is mounted with a hinge 29 on the first linear guide 9 of the guide assembly 6. The support leg 28 is provided with a support pad 30 which can be leant against the ground. On the support leg 28 a linear rack 31 having teeth is attached, in the notches between the teeth a pawl 34 of the stiffening bar 32 is caught to obtain rigid support of the hide. The stiffening bar 32 is mounted with a hinge 33 on the first linear guide 9 of the guide assembly 6 or on the vertical mounting members 24 in case of the hide 1"' provided with one pair of guide assemblies 6 (Fig. 10). The stiffening bar 32 is constituted by a turnbuckle having two bolts 35 and 36 of opposite threads. The support leg 28 can be leant on uneven ground and the stiffening bar 32 is configured to locate the pawl 34 in a notch between the teeth of the linear rack 31 whatever the position of the support 28 leg is. Thereafter the turnbuckle must be turned by the operator to obtain leveling of the hide and rigid support of the hide. On the chassis of the trailer a level (a spirit or bubble level) may be attached so that an operator of the hide may level the chassis and the entire structure of the hide. Both the support leg 28 and the stiffening bar 32 may also be attached to the trailer chassis 3 by means of other elements. Supporting and stabilizing assemblies of other types may also be employed.

In order to put up the hide 1 the operator must stabilize and level the trailer. First the support leg 28 of one of the support assemblies 7 is released from its transporting vertical position and leant down against the ground. Thereafter the stiffening bar 32 is lowered from its transporting vertical position and leant down into a notch of the linear rack 31 on the support leg 28. After all the support assemblies 7 have been leant against the ground the turnbuckles of the stiffening bars 32 are used to level the chassis 3, thereafter the stiffening bars 32 must be tensioned to keep the hide stably. The operator may use the control panel on the trailer to check whether the hide is raised and lowered properly. Thereafter operator may get into the hide and switch on the drive to raise the hide to a required level. There should be a rope ladder inside the hide in case the drive suddenly stops because of some reason (e.g. flat battery) to allow the operator to come down to the ground.

The presented drive member 21 drives the ropes 15 of all the guide assemblies 6, the guide assemblies may be driven by a driving member comprising two shafts i.e. each shaft driving two guide assemblies 6, or four shafts i.e. each guide assembly 6 being driven by a separate driving shaft, the movement of which being synchronized electronically or the shaft being coupled by gear wheels. Typically a DC motor may be employed to drive the guide assemblies 6, powered by a battery.

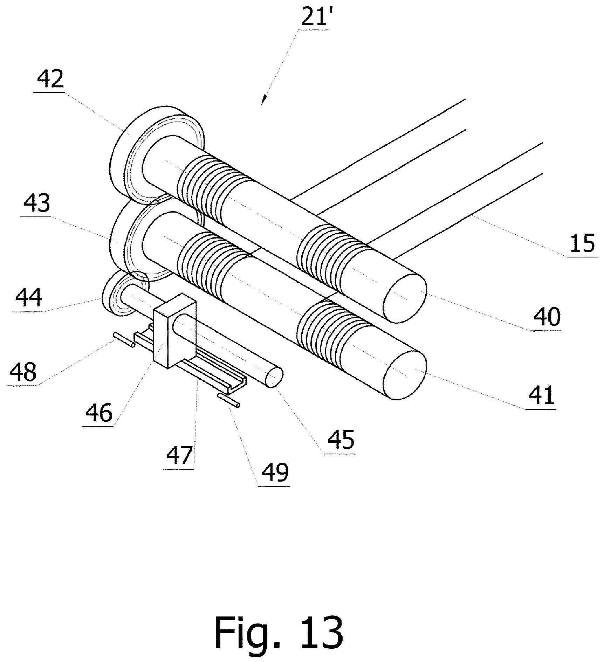

Fig. 13 presents an embodiment of a rope drive system which comprises a drive member 21' having two shafts 40 and 41 being threaded to receive the rope 15 and being coupled by means of two gear wheels 42 and 43 (motor is not shown), thus the shafts 40 and 41 revolve in opposite directions. Each of the shafts pulls two ropes 15 when revolving. The lower gear wheel 43 is in mesh connection with a gear wheel 44 attached to a threaded shaft 45. There is a nut-like element 46 which moves along the shaft 45 as it revolves, it moves along a guide 47. The range of the movement of the shafts 40 and 41 which is related to the lowermost and uppermost positions of the hide is controlled by means of two sensors or switches 48 and 49 which send stop signals to the control system when engaged by the element 46.

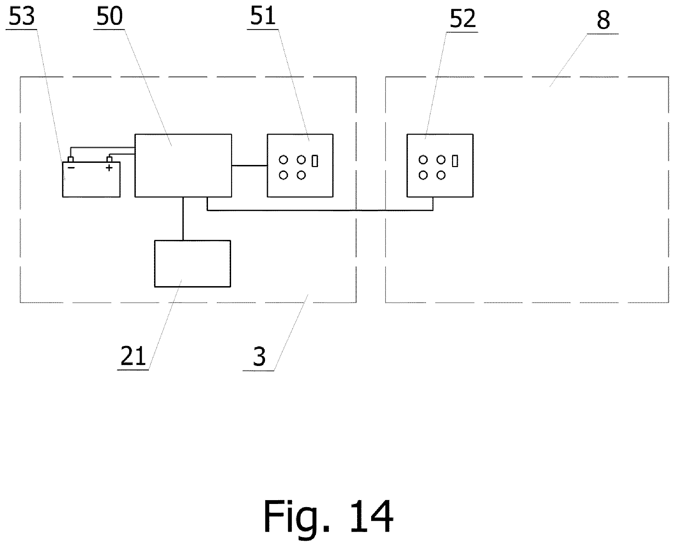

As shown schematically in Fig. 14 the mobile hide is provided with a controller 50 and a control panel 51 mounted on the chassis 3 and a control panel 52 mounted inside the hide housing 8, thus the hide 1 may be operated by an operator either standing on the ground or located in the housing. The driving member 21, the controller 50, the control panel 51 and the battery 53 may be located in a case 23 (Fig. 2).

## Claims

1. A mobile hide (1, 1', 1", 1"') mounted on a trailer (2), comprising:
- a housing (8),
- a driving means configured to alter a position of the housing (8) between a lowered configuration and a raised configuration,
- a guide assembly (6) configured to ensure a substantially vertical movement of the housing,
**characterized in that** the hide (1, 1', 1", 1"') comprises:
- at least two guide assemblies (6), each guide assembly (6) comprising at least two linear guides (9, 10); and
- a rope driving system comprising:
∘ a drive member (21, 21') mounted on the trailer (2); and
∘ pulleys (16, 17, 18, 19, 22) attached to the trailer (2) and to the linear guides (9, 10);
∘ wherein two of the pulleys (16, 17; 18, 19) are attached to a single linear guide (9, 10).

2. The mobile hide according to claim 1, **characterized in that** the hide (1, 1', 1", 1"') comprises four guide assemblies (6).

3. The mobile hide according to claim 1, **characterized in that** the hide (1, 1', 1", 1"') comprises six guide assemblies (6).

4. The mobile hide according to any preceding claim, **characterized in that** the hide is further provided with a support assembly (7) which comprises a support leg (28) and a stiffening bar (32).

5. The mobile hide according to claim 1 to 4, **characterized in that** the support assembly (7) is attached to a linear guide (9) of the guide assembly (6).

6. The mobile hide according to claim 1 to 4, **characterized in that** the support assembly (7) is attached to a mounting member (24) attached to the chassis (3) of the trailer (2).

7. The mobile hide according to claim 6, **characterized in that** the mounting member (24) is substantially parallel to the linear guide (9) of the guide assembly (6).

8. The mobile hide according to any preceding claim, **characterized in that** the drive member (21') comprises two shafts (40, 41) coupled by gearwheels (42, 43).

9. The mobile hide according to claim 8, **characterized in that** the drive member (21') further comprises a threaded shaft (45) and a nut-like element (46) coupled with the shafts (40, 41) to engage limit switches or sensors (48, 49).

## Amended claims

### Amended claims in accordance with Rule 137(2) EPC.

**1.** A mobile hide (1, 1', 1", 1'") mounted on a trailer (2), comprising:
- a housing (8),
- a driving means configured to alter a position of the housing (8) between a lowered configuration and a raised configuration,
- a guide assembly (6) configured to ensure a substantially vertical movement of the housing,
- at least two guide assemblies (6), each guide assembly (6) comprising at least two linear guides (9, 10); and
- a rope driving system comprising a drive member (21, 21') mounted on the trailer (2);
**characterized in that**:
- the rope driving system further comprises:
- pulleys (16, 17, 18, 19, 22) attached to the trailer (2) and to the linear guides (9, 10);
- wherein two of the pulleys (16, 17; 18, 19) are attached to a single linear guide (9, 10).

**2.** The mobile hide according to claim 1, **characterized in that** the hide (1, 1', 1", 1"') comprises four guide assemblies (6).

**3.** The mobile hide according to claim 1, **characterized in that** the hide (1, 1', 1", 1'") comprises six guide assemblies (6).

**4.** The mobile hide according to any preceding claim, **characterized in that** the hide is further provided with a support assembly (7) which comprises a support leg (28) and a stiffening bar (32).

**5.** The mobile hide according to claim 1 to 4, **characterized in that** the support assembly (7) is attached to a linear guide (9) of the guide assembly (6).

**6.** The mobile hide according to claim 1 to 4, **characterized in that** the support assembly (7) is attached to a mounting member (24) attached to the chassis (3) of the trailer (2).

**7.** The mobile hide according to claim 6, **characterized in that** the mounting member (24) is substantially parallel to the linear guide (9) of the guide assembly (6).

**8.** The mobile hide according to any preceding claim, **characterized in that** the drive member (21') comprises two shafts (40, 41) coupled by gear wheels (42, 43).

**9.** The mobile hide according to claim 8, **characterized in that** the drive member (21') further comprises a threaded shaft (45) and a nut-like element (46) coupled with the shafts (40, 41) to engage limit switches or sensors (48, 49).

**1.** A mobile hide (1, 1', 1", 1'") mounted on a trailer (2), comprising:
- a housing (8),
- a driving means configured to alter a position of the housing (8) between a lowered configuration and a raised configuration,
- a guide assembly (6) configured to ensure a substantially vertical movement of the housing,
- at least two guide assemblies (6), each guide assembly (6) comprising at least two linear guides (9, 10); and
- a rope driving system comprising a drive member (21, 21') mounted on the trailer (2);
**characterized in that**:
- the rope driving system further comprises:
- pulleys (16, 17, 18, 19, 22) attached to the trailer (2) and to the linear guides (9, 10);
- wherein two of the pulleys (16, 17; 18, 19) are attached to a single linear guide (9, 10);
- wherein the drive member (21') comprises two shafts (40, 41), coupled by gear wheels (42, 43), a threaded shaft (45) and a nut-like element (46), coupled with the shafts (40, 41) to engage limit switches or sensors (48, 49).

**2.** The mobile hide according to claim 1, **characterized in that** the hide (1, 1', 1", 1'") comprises four guide assemblies (6).

**3.** The mobile hide according to claim 1, **characterized in that** the hide (1, 1', 1", 1'") comprises six guide assemblies (6).

**4.** The mobile hide according to any preceding claim, **characterized in that** the hide is further provided with a support assembly (7) which comprises a support leg (28) and a stiffening bar (32).

**5.** The mobile hide according to claim 1 to 4, **characterized in that** the support assembly (7) is attached to a linear guide (9) of the guide assembly (6).

**6.** The mobile hide according to claim 1 to 4, **characterized in that** the support assembly (7) is attached to a mounting member (24) attached to the chassis (3) of the trailer (2).

**7.** The mobile hide according to claim 6, **characterized in that** the mounting member (24) is substantially parallel to the linear guide (9) of the guide assembly (6).
